# EUROPÄISCHE PATENTSCHRIFT

(11) **EP 1 089 065 B1**
(45) Veröffentlichungstag und Bekanntmachung des Hinweises auf die Patenterteilung: **07.11.2007**
(21) Anmeldenummer: 00121509.4
(22) Anmeldetag: 29.09.2000
(51) Int. Cl.: G01N 3/62, G01N 3/42

(54) **Verfahren und Vorrichtung zur Kalibrierung einer Eindringtiefenmesseinrichtung einer Härteprüfmaschine**
Method and device for calibrating the penetration depth of a hardness tester
Méthode et dispositif pour calibrer la profondeur de pénétration d'une machine d'essai de dureté

(30) Priorität: 01.10.1999 DE 19947412
(43) Veröffentlichungstag der Anmeldung: 04.04.2001
(73) Patentinhaber: Bundesrepublik Deutschland, vertr. d.d. Bundes- ministerium f. Wirtschaft- und Technologie, dieses vertr. d.d. Präs. d. Phys.-Techn. Bundesanstalt, 38126 Braunschweig (DE)
(72) Erfinder: Löffler, Frank, Dr., 38176 Wendeburg (DE); Sawla, Amritlal, Dr., 38102 Braunschweig (DE)
(74) Vertreter: Lins, Edgar

(56) Entgegenhaltungen:
- EP-A- 0 949 497
- US-A- 5 177 999
- US-A- 5 616 857

## Beschreibung

Die Erfindung betrifft ein Verfahren zur Kalibrierung einer Eindringtiefenmesseinrichtung einer Härteprüfmaschine. Die Erfindung betrifft ferner eine Vorrichtung zur Kalibrierung einer Eindringtiefenmesseinrichtung einer Härteprüfmaschine, wobei die Vorrichtung eine Längenmesseinrichtung, die für eine Bewegung in Belastungsrichtung mit der Eindringtiefenmesseinrichtung koppelbar ist, und einen mit der Eindringtiefenmesseinrichtung verbindbaren Rahmen aufweist.

### Nomenklatur verwendeter Fachbegriffe:

### Eindringtiefenmesseinrichtung:

Ein Längenmessgerät, das fest in einer Härteprüfmaschine eingebaut ist und die Höhenänderung eines Eindringkörpers (Eindringstempels) anzeigt.

### Eindringkörper (Eindringstempel):

Wird in einer Eindringkörperaufnahme einer Härteprüfmaschine gehalten und drückt nach Auslösung der Belastungseinheit der Härteprüfmaschine in einen zu messenden Körper ein.

### Grenzabweichung:

Für ein zu betrachtendes Messgerät durch Spezifikationen, Vorschriften usw. zugelassene Extremwerte für eine Messabweichung.

### Härteprüfmaschine:

Gerät zur Bestimmung der Härte eines Körpers.

### Kalibriereinrichtung:

Eine Einrichtung, die zur Kalibrierung verwendet wird.

### Kalibrierung eines Messgeräts:

Tätigkeit zur Ermittlung des Zusammenhangs zwischen den ausgegebenen Werten eines Messgerätes und den zugehörigen, durch Normale festgelegten Werten einer Messgröße unter vorgegebenen Bedingungen.

### Messabweichung:

Messergebnis nach Abzug des wahren Wertes der Messgröße.

### Messtaster:

Ein Körper, der den Kontakt zu einem anderen Körper (Antastkörper) ermöglicht. Der Messtaster nimmt über verschiedene mögliche physikalische Prinzipien eine Längenänderung wahr und bewirkt die Anzeige dieser Längenänderung zwischen der Halterung des Messtasters und des Antastkörpers. Er dient zur Bestimmung der Längenänderung.

### Messunsicherheit:

Dem Messergebnis zugeordneter Parameter, der die Streuung der Werte kennzeichnet, die vernünftigerweise der Messgröße zugeordnet werden könnten.

### Prüfkraft:

Sammelbegriff für die zur Härteprüfung aufgebrachten Kräfte. Man unterscheidet die anfangs aufgebrachte Prüfvorkraft (F₀) und die danach zusätzlich aufgebrachte Prüfzusatzkraft (F₁). Die Summe aus beidem ist die Prüfgesamtkraft (F₀ + F₁)

### Prüfzyklus:

Die zeitliche Abfolge der einzelnen Schritte bei der Härteprüfung.

### Rückstellkraft:

Eine Kraft, die eine Rückstellung in eine festgelegte Position ermöglicht.

Die Kalibrierung der Eindringtiefenmesseinrichtung von Härteprüfmaschinen erfolgt in der Regel unter Verwendung von Härtevergleichsplatten. Hierbei wird mit einer zu kalibrierenden Härteprüfmaschine die Härte einer Härtevergleichsplatte bestimmt. Anschließend wird dieser Härtewert mit dem bekannten Wert der Härtevergleichsplatte verglichen. Nachteilig ist bei diesem Verfahren, dass für die Kalibrierung einer Härteprüfmaschine mehrere Härtevergleichsplatten verwendet werden müssen, um unterschiedliche Härtebereiche und Härteskalen abzudekken. Hierbei nutzen die Härtevergleichsplatten ab und müssen nach einer Anzahl von Eindrücken oder nach einer bestimmten Zeit ausgetauscht werden. Die kleinsten Messunsicherheiten werden durch die Kalibrierverfahren für Härteprüfmaschine und Härtevergleichsplatte sowie durch Materialinhomogenitäten begrenzt.

Neben dieser als indirekt bezeichneten Methode kann nach der Norm DIN EN ISO 6508-2 auch eine direkte Methode zur Kalibrierung der Härteprüfmaschine zur Anwendung kommen. Nach dieser Norm müssen die Prüfkraft, der Eindringstempel, die Eindringtiefenmesseinrichtung und der Prüfzyklus kalibriert werden. Während die Kalibrierung der Prüfkraft, des Eindringstempels und des Prüfzyklusses mit bereits bekannten Methoden erfolgen kann, gibt es bislang nur wenige Methoden für die Kalibrierung der Eindringtiefenmesseinrichtung. Die Ursache hierfür liegt darin, dass die Kalibrierung der Eindringtiefenmesseinrichtung unter der Vorprüfkraft der Härteprüfmaschine, die nach der Norm DIN EN ISO 6508 bei 98,07 N oder 29,42 N liegt, erfolgen muss. Dabei müssen die Forderungen der Norm DIN EN ISO 6508-2 erfüllt werden, wonach gemäß Abschnitt 4.4.2 das Messgerät, das zur Prüfung der Eindringtiefenmesseinrichtung verwendet wird, auf 0,0002 mm genau sein muss. Weiter führt diese Norm aus, dass die Kalibrierung in verschiedenen Teilbereichen zu erfolgen hat und hierzu der Eindringstempel um bekannte Werte im Sinne zunehmender Härtewerte verschoben wird. Die Eindringtiefenmessung ist eine Längenmessung.

In VDI-Berichte Nr. 1194, 1995, Seite 287 bis 292, ist eine Vorrichtung zur Kalibrierung der Eindringtiefenmesseinrichtung beschrieben, bei der die Messung der Länge außerhalb der Achse erfolgt, in der der Eindringkörper bewegt wird. Für die Längenmessung wird ein elektronisches Längenmesssystem (Firma Heidenhain - Modell MT12 -) verwendet. In der Betriebsanleitung der Firma Heidenhain "Heidenhain-Metro MT 12/MT25/MT12B/MT25B" Nr. 22736694 5/96 wird auf eine Messgenauigkeit von +/- 0,5 µm hingewiesen. Demgemäß kann dieses Gerät die Forderungen der Norm DIN EN ISO 6508-2 nicht erfüllen.

In der EP 0 949 497 A2 ist eine Vorrichtung zur Kalibrierung einer Härteprüfmaschine beschrieben, die eine Längenmesseinrichtung, die für eine Bewegung in Belastungsrichtung mit der Eindringtiefenmesseinrichtung, und einen mit der Eindringtiefenmesseinrichtung verbindbaren Rahmen aufweist. Diese Vorrichtung ist ausgelegt zur Kalibrierung von Härteprüfmaschinen für die gleichzeitige Bestimmung verschiedener Größen, wie eine Kraft und ein Weg bei statischer und dynamischer Belastung. Bei dieser Vorrichtung treten aufgrund der zur Messung der Kraft erforderlichen Kräfteeinwirkungen Verformungen in der Längenmessanordnung auf, die die Genauigkeit einer Längenmessung beeinträchtigen. Aus diesem Grund ist diese Vorrichtung nicht geeignet, die Forderung der Norm DIN EN ISO 6508-2 zu erfüllen.

Der vorliegenden Erfindung liegt die Aufgabe zugrunde, eine Kalibrierung einer Eindringtiefenmesseinrichtung einer Härteprüfmaschine zu ermöglichen, die verbesserte Grenzabweichungen ermöglicht und ohne verschleißanfällige Härtevergleichsplatten auskommt.

Diese Aufgabe wird erfindungsgemäß mit einem Verfahren gelöst, das folgende Verfahrensschritte aufweist:
- Kopplung eines Rahmens mit der Eindringtiefenmesseinrichtung für eine Bewegung in Belastungsrichtung,
- Aufnehmen der Last des Rahmens durch ein elastisch verformbares Teil,
- Ausüben einer Vorkraft in Belastungsrichtung unter Verformung des elastisch verformbaren Teils und unter Anlegen eines Messtasters an eine Grundplatte unter Beibehaltung der Position des Rahmens,
- in Wirkverbindung Bringen einer Verstelleinrichtung für die Position des Rahmens,
- Verstellung der Verstelleinrichtung und Vergleich des Messsignals des Messtasters mit einem Anzeigesignal der Eindringtiefenmesseinrichtung.

Vorzugsweise wird dabei für die Kalibrierung ein Eindringkörper der Eindringtiefenmesseinrichtung durch einen Adapter ersetzt.

Zur Lösung der genannten Aufgabe ist ferner eine Vorrichtung der eingangs erwähnten Art gekennzeichnet durch eine Vorrichtung zur Kalibrierung einer Eindringtiefenmesseinrichtung einer Härteprüfmaschine, wobei die Vorrichtung eine Längenmesseinrichtung, die für eine Bewegung in Belastungsrichtung mit der Eindringtiefenmesseinrichtung koppelbar ist, und einen mit der Eindringtiefenmesseinrichtung verbindbaren Rahmen aufweist.

Erfindungsgemäß erfolgt die Längenmessung der Kalibriereinrichtung in derselben Achse wie die Längenmessung der zu kalibrierenden Eindringtiefenmesseinrichtung. Ferner wird die an dem zu kalibrierenden Gerät anliegende Kraft von der Kalibriereinrichtung auf eine Auflage, nämlich die Grundplatte, übertragen, ohne dass der Messtaster eine erhebliche Kraft erfährt, da nur die Rückstellkraft des Messtasters überwunden werden muss. Dabei kann ein Messtaster mit einer Grenzabweichung von < 0,2 µm verwendet werden. Das Verstellsystem kann so ausgebildet sein, dass die Position der Aufnahme des Eindringstempels in der Höhe um mindestens 100 µm verstellbar ist, und zwar in vorher festgelegten Intervallen.

Die Realisierung der Erfindung erlaubt resultierende Messabweichungen durch die Längenmessung in der Belastungsachse und der Verstellung durch das Verstellsystem mit resultierenden Messabweichungen von jeweils weniger als 0,1 µm.

Durch die Erfindung wird realisiert, dass
- die Achsen des Messtasters und der Eindringstempelhalterung möglichst übereinstimmen,
- die Verstelleinrichtung keinen Einfluss auf die Messtasterfunktion ausübt.

Zur Erzielung der höchsten Genauigkeit müssen die Aufbauten zwischen dem Messtaster und der Eindringstempelhalterung sowie zwischen dem Messtaster und der Auflage sehr steif sein und dürfen die Abweichungen aus dem Achsversatz, der Verstelleinrichtung und der Steifigkeit der Konstruktion während der Messung jeweils nicht mehr als 0,1 µm betragen.

Als Messtaster kann unproblematisch ein induktiver, inkrementeller oder piezokeramischer Messaufnehmer verwendet werden, wobei die Einhaltung der geforderten Grenzabweichung zu beachten ist, wenn die geforderte Genauigkeit eingehalten werden soll. Wegen seiner Entkopplung von der Vorlast kann er für eine Lastaufnahme von nicht mehr als 5 N ausgelegt sein.

Die Verstellung an dem zu messenden Gegenstand kann mechanisch von Hand, elektrisch, hydraulisch oder pneumatisch erfolgen, wobei der Abgleich mit der Anzeige der Eindringtiefenmesseinrichtung möglich sein muss.

Das erfindungsgemäße Verfahren und die erfindungsgemäße Vorrichtung werden vorzugsweise für die Kalibrierung einer Rockwell-Härteprüfmaschine eingesetzt. Durch die Erfindung werden die Nachteile der indirekten Kalibrierung vermieden, bei der für die Kalibrierung einer Härteprüfmaschine mehrere Härteverlgeichsplatten verwendet werden müssen, um unterschiedliche Härtebereiche und Härteskalen abzudecken. Während die Härtevergleichsplatten hierbei abnutzen und erneuert werden müssen, treten an der erfindungsgemäßen Kalibriereinrichtung bei ordnungsgemäßem Gebrauch keinerlei vergleichbare Abnutzungserscheinungen auf. Ferner sind die bei der indirekten Methode erzielbaren Messunsicherheiten insbesondere durch die Kalibrierverfahren für Härteprüfmaschinen und Härtevergleichsplatten sowie durch Materialinhomogenitäten begrenzt. Auch diese Begrenzung ist bei der erfindungsgemäßen Kalibrierung nicht vorhanden, weil erfindungsgemäß nur der Messtaster einen wesentlichen Einfluss auf die Messunsicherheit besitzt.

Mit der Erfindung ist es möglich, die Forderung der Norm DIN EN ISO 6508-2 erstmals zu erfüllen und die geforderten kleinen Messunsicherheiten bei der Kalibrierung zu ermöglichen. Die wesentlichen Vorteile sind:
a) Messung der Längenänderung in der Belastungsachse,
b) Messung unter einer Prüfvorkraft, ohne dass die Prüfvorkraft an dem Messsystem anliegt,
c) Kalibrierung der Längenmesseinheit mit einer Vorrichtung für alle Härteskalen und den gesamten Härtebereich,
d) Entkopplung der wirkenden Vorprüfkraft von der Längenmessung bei gleichzeitiger Messung der Tiefenverstellung in der Belastungsachse und/oder
e) Entkopplung der Verstelleinheit von der Messeinheit der Kalibriereinrichtung.

Die Erfindung soll im folgenden anhand von in der Zeichnung dargestellten Ausführungsbeispielen näher erläutert werden. Es zeigen:
- Figur 1: eine schematische Darstellung einer ersten Ausführungsform einer erfindungsgemäßen Kalibriereinrichtung,
- Figur 2 bis 8: schematische Darstellungen für den Kalibrierablauf,
- Figur 9: eine schematische Darstellung eines weiteren Ausführungsbeispiels der erfindungsgemäßen Kalibriervorrichtung.

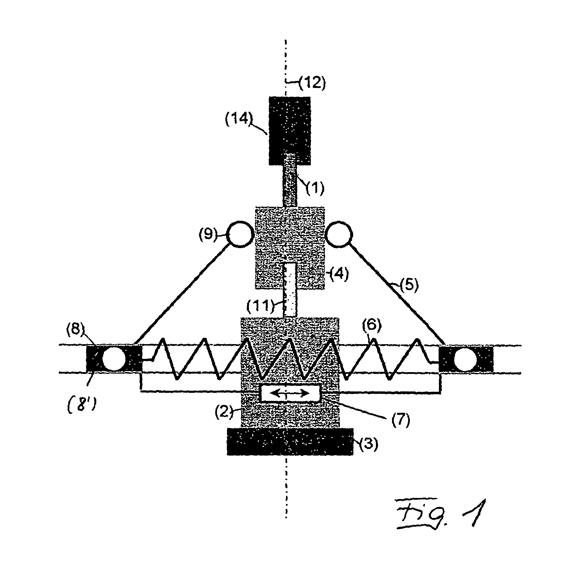

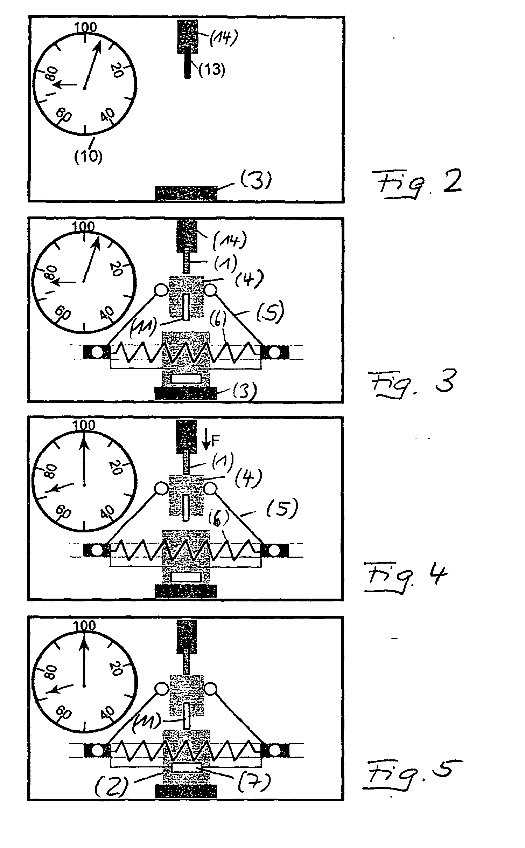

Figur 1 zeigt ein Ausführungsbeispiel einer erfindungsgemäßen Kalibriervorrichtung, die einerseits mit einem Adapter 1 in eine Aufnahme 14 einer (im übrigen nicht dargestellten) Härteprüfmaschine eingebaut ist. Eine Grundplatte 2 der Kalibriervorrichtung liegt auf einem Probenteller 3 der Härteprüfmaschine auf. Mit Aufbringung der Vorlast durch die Härteprüfmaschine (über die Aufnahme 14) drückt der Adapter 1 gegen einen Rahmen 4, dessen in Richtung einer Belastungsachse 12 liegende Last über zwei Schenkel 5 auf eine Feder 6 und die Grundplatte 2 übertragen wird. Die Schenkel 5 werden an einem Ende in einer Führung 8 mit Führungsstücken 8'gehalten, zwischen denen die Feder 6 befestigt ist, um die Last aufzunehmen. Eine Verstelleinheit 7 wirkt auf die Führungsstücke 8*'* und bewirkt eine Verschiebung der Schenkel 5, die an ihrem jeweils anderen Ende über Gelenke 9 den Rahmen 4 und damit den Adapter 1 verschieben. Diese Verschiebung erfolgt unter Beibehaltung der Vorlast in vorher festgelegten Intervallen, die innerhalb des Eindringtiefenbereichs von ca. 200 µm liegen. Nach jeder Verstellung wird eine Anzeige 10 (Figur 2) der Eindringtiefenmesseinrichtung der Härteprüfmaschine mit einer Anzeige eines Messtasters verglichen. Der Messtaster ist von der Unterseite des Rahmens 4 aufgenommen und liegt mit seiner Unterseite während des Kalibriervorganges an der Grundplatte 2 an.

Für den den eigentlichen Kalibriervorgang bildenden Vergleich der Anzeigen findet die Längenmessung in der Belastungsachse 12 statt. Die in der Norm geforderte Grenzabweichung der Kalibriereinrichtung wird möglich, da die notwendige Verstelleinheit 7 und die Prüfvorkraft von der Messstelle entkoppelt sind und damit keinen Beitrag zum Messsicherheitsbudget liefern.

Figur 2 zeigt den Probenteller 3 und die Aufnahme 14 der Härteprüfmaschine mit einer schematisch dargestellten Anzeigeeinrichtung. In die Aufnahme 14 ist ein Eindringstempel 13 eingesetzt, mit dem die Eindringtiefe in ein (nicht dargestelltes) Probestück gemessen wird.

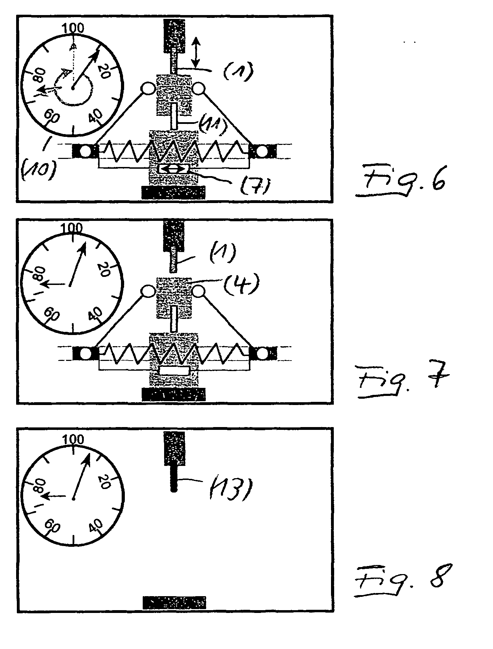

Gemäß Figur 3 wird beim Einsetzen der Kalibriereinrichtung auf den Probeteller 3 der Eindringstempel 13 durch den Adapter 1 ersetzt. Der Rahmen 4 wird durch die Schenkel 5 und die Feder 6 in einer Ausgangsstellung gehalten, in der der Adapter 1 noch nicht am Rahmen 4 anliegt. Ebenso ist der Messtaster 11 in den Rahmen 4 eingefahren.

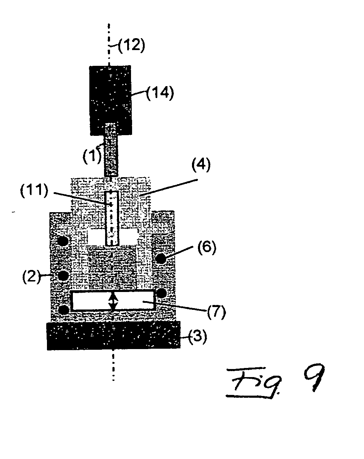

Figur 4 zeigt die Phase, in der die Vorlasteinstellung an der Härteprüfmaschine ausgelöst wird , wodurch der Adapter 1 auf den Rahmen 4 drückt und über die Schenkel 5 die Feder 6 spannt.

Anschließend wird gemäß Figur 5 der Messtaster 11 so verstellt, dass er an der Grundplatte 2 als Antastkörper anliegt. Zugleich wird die Verstelleinrichtung 7 eingekoppelt.

Gemäß Figur 6 wird durch die Betätigung der Verstelleinrichtung 7 die Höhenposition des Adapters 1 verstellt und schrittweise ein Vergleich der Anzeige des Messtasters 11 mit der Anzeige 10 der Härteprüfmaschine als eigentlicher Kalibriervorgang vorgenommen. Nachdem der zu kalibrierende Messbereich überfahren ist, wird gemäß Figur 7 die Vorlast an der Härteprüfmaschine abgestellt, sodass sich zwischen Adapter 1 und Rahmen 4 wieder ein Zwischenraum ausbildet. Dann wird die Kalibriereinrichtung ausgebaut und gemäß Figur 8 der Eindringstempel 13 wieder eingesetzt, wodurch die Härteprüfmaschine wieder einsatzbereit ist.

Bei dem in Figur 9 dargestellten weiteren Ausführungsbeispiel einer Kalibriervorrichtung werden die gleichen Verfahrensschritte ausgeführt. Durch eine zylindrische Ausbildung des Rahmens 4 und eine darunter angeordnete Verstelleinrichtung 7 läßt sich die Feder zylindrisch in der Grundplatte 2 anordnen, wodurch eine kompaktere Ausführung erreicht wird.

## Patentansprüche

1. Vorrichtung zur Kalibrierung einer Eindringtiefenmesseinrichtung einer Härteprüfmaschine, wobei die Vorrichtung eine Längenmesseinrichtung, die für eine Bewegung in Belastungsrichtung (12) mit der Eindringtiefenmesseinrichtung koppelbar ist, und einen mit der Eindringtiefenmesseinrichtung verbindbaren Rahmen (4) aufweist, **gekennzeichnet durch** ein elastisch verformbares Teil (6), das zur Aufnahme der Last des Rahmens (4) in Belastungsrichtung (12) mit dem Rahmen (4) verbunden ist, **durch** einen in der Belastungsrichtung (12) von dem Rahmen (4) aufgenommenen Messtaster (11), **durch** eine Grundplatte (2), an der der Messtaster (11) während der Kalibrierung anliegt, und **durch** eine in Wirkverbindung bringbare Verstelleinrichtung (7) zur Verschiebung des Rahmens (4) in Belastungsrichtung (12) zur Durchführung der Kalibrierung.

2. Vorrichtung nach Anspruch 1, **gekennzeichnet durch** einen Adapter (1), der anstelle eines Eindringkörpers (13) in der Eindringtiefenmesseinrichtung befestigbar und zur Anlage an dem Rahmen (4) geeignet ist.

3. Vorrichtung nach Anspruch 1 oder 2, **dadurch gekennzeichnet, dass** die Position des Messtasters (11) in Belastungsrichtung (12) verstellbar ist.

4. Vorrichtung nach einem der Ansprüche 1 bis 3, **dadurch gekennzeichnet, dass** der Messtaster (11) für eine Lastaufnahme von nicht mehr als 5 N ausgelegt ist.

5. Vorrichtung nach einem der Ansprüche 1 bis 4, **dadurch gekennzeichnet, dass** der Messtaster einen induktiven, inkrementellen oder piezokeramischen Messaufnehmer aufweist.

6. Verfahren zur Kalibrierung einer Eindringtiefenmesseinrichtung einer Härteprüfmaschine mit folgenden Verfahrensschritten:
- Kopplung eines Rahmens (4) mit der Eindringtiefenmesseinrichtung für eine Bewegung in Belastungsrichtung (12),
- Aufnehmen der Last des Rahmens (4) durch ein elastisch verformbares Teil (6),
- Ausüben einer Vorkraft in Belastungsrichtung (12) unter Verformung des elastisch verformbaren Teils (6) und unter Anlegen eines Messtasters (11) an eine Grundplatte (2) unter Beibehaltung der Position des Rahmens (4),
- in Wirkverbindung Bringen einer Verstelleinrichtung (7) für die Position des Rahmens (4) in Belastungsrichtung (12),
- Verstellung der Verstelleinrichtung (7) und Vergleich des Messsignals des Messtasters (11) mit einem Anzeigesignal der Eindringtiefenmesseinrichtung.

7. Verfahren nach Anspruch 6, bei dem für die Kalibrierung ein Eindringkörper (13) der Eindringtiefenmesseinrichtung durch einen Adapter (1) ersetzt wird.

## Claims

1. Apparatus for calibrating a penetration depth measuring device of a hardness tester, the apparatus having a length measuring device, which can be coupled to the penetration depth measuring device for a movement in the loading direction (12), and a frame (4) which can be connected to the penetration depth measuring device, **characterized by** an elastically deformable part (6) which, in order to absorb the load of the frame (4) in the loading direction (12), is connected to the frame (4), by a probe (11) held by the frame (4) in the loading direction (12), by a base plate (2) against which the probe (11) bears during calibration, and by an adjusting device (7), which can be brought into operative connection, for displacing the frame (4) in the loading direction (12) in order to carry out the calibration.

2. Apparatus according to Claim 1, **characterized by** an adapter (1) which, instead of an indenter (13), can be fastened in the penetration depth measuring device and is suitable for bearing against the frame (4).

3. Apparatus according to Claim 1 or 2, **characterized in that** the position of the probe (11) can be adjusted in the loading direction (12).

4. Apparatus according to one of Claims 1 to 3, **characterized in that** the probe (11) is designed for a load absorption of no more than 5 N.

5. Apparatus according to one of Claims 1 to 4, **characterized in that** the probe has an inductive, incremental or piezoceramic measuring sensor.

6. Method for calibrating a penetration depth measuring device of a hardness tester, having the following method steps:
- coupling a frame (4) to the penetration depth measuring device for a movement in the loading direction (12),
- absorbing the load of the frame (4) by means of an elastically deformable part (6),
- exerting a preliminary force in the loading direction (12) in conjunction with the deforming of the elastically deformable part (6) and the application of a probe (11) to a base plate (2) while maintaining the position of the frame (4),
- bringing an adjusting device (7) into operative connection for the position of the frame (4) in the loading direction (12), and
- adjusting the adjusting device (7) and comparing the measuring signal of the probe (11) with a display signal of the penetration depth measuring device.

7. Method according to claim 6, in which for the calibration an intender (13) of the penetration depth measuring device is replaced by an adapter (1).

## Revendications

1. Dispositif pour calibrer un appareil de mesure de profondeur de pénétration d'une machine d'essai de dureté, dans lequel le dispositif comprend un organe de mesure de longueur, qui peut être accouplé avec l'appareil de mesure de profondeur de pénétration pour un déplacement dans la direction de la charge (12), et un cadre (4) pouvant être relié à l'appareil de mesure de profondeur de pénétration, **caractérisé par** une partie déformable élastiquement (6) qui est reliée au cadre (4) pour supporter la charge du cadre (4) dans la direction de la charge (12), par un palpeur de mesure (11) porté par le cadre (4) dans la direction de la charge (12), par une plaque de base (2) sur laquelle le palpeur de mesure (11) s'applique lors du calibrage et par un organe de réglage (7) pouvant être mis en liaison active pour régler le cadre (4) dans la direction de la charge (12) pour effectuer le calibrage.

2. Dispositif selon la revendication 1, **caractérisé par** un adaptateur (1) adapté pour être fixé dans l'appareil de mesure de profondeur de pénétration et pour être placé sur le cadre (4) à la place d'un corps de pénétration (13).

3. Dispositif selon la revendication 1 ou 2, **caractérisé en ce que** la position du palpeur de mesure (11) peut être réglée dans la direction de la charge (12).

4. Dispositif selon l'une des revendications 1 à 3, **caractérisé en ce que** le palpeur de mesure (11) est conçu pour supporter une charge qui n'est pas supérieure à 5 N.

5. Dispositif selon l'une des revendications 1 à 4, **caractérisé en ce que** le palpeur de mesure (11) comporte un capteur de mesure, inductif, incrémentiel ou piézocéramique.

6. Procédé pour calibrer un appareil de mesure de profondeur de pénétration pour une machine d'essai de dureté comprenant les étapes suivantes :
- accouplement d'un cadre (4) avec l'appareil de mesure de profondeur de pénétration pour un déplacement dans la direction de charge (12),
- reprise de la charge du cadre (4) par une partie (6) déformable élastiquement,
- exercer une précontrainte dans la direction de la charge (12) en déformant la partie (6) déformable élastiquement et en appliquant un palpeur de mesure (11) sur une plaque de base (2) avec maintien de la position du cadre (4),
- mise en liaison active d'un organe de réglage (7) de la position du cadre (4) dans la direction de la charge (12),
- réglage de l'organe de réglage (7) et comparaison du signal de mesure du palpeur de mesure (11) avec un signal indiqué de l'appareil de mesure de la profondeur de pénétration.

7. Procédé selon la revendication 6, dans lequel pour le calibrage un corps de pénétration (13) de l'appareil de mesure de la profondeur de pénétration est remplacé par un adaptateur (1).
